# EUROPEAN PATENT APPLICATION

(11) **EP 4 322 649 A1**
(43) Date of publication of application: **14.02.2024**
(21) Application number: 21935612.8
(22) Date of filing: 09.04.2021
(51) Int. Cl.: H04W 72/04

(54) **COMMUNICATION METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: dompatent von Kreisler Selting Werner - Partnerschaft von Patent- und Rechtsanwälten mbB
(86) International application number: PCT/CN2021/086262
(87) International publication number: WO 2022/213387

(57) **Abstract**

The present disclosure provides a communication method and a communication apparatus. The communication method may comprise: determining a first message frame, wherein the first message frame comprises information about multi-user multiple-input multiple-output (MU-MIMO), and the information about MU-MIMO is used for identifying the support of a single-type resource unit and a composite resource unit by a communication device; and sending the first message frame. By means of the technical solution provided in the exemplary embodiments of the present disclosure, the spectrum utilization can be improved.

## Description

### TECHNICAL FIELD

This disclosure relates to the field of wireless communication, more particular to a communication method and a communication device.

### BACKGROUND

The current research scope of Wi-Fi technology includes: 320MHz bandwidth transmission, aggregation and collaboration of multiple frequency bands, etc. It is expected to improve the rate and throughput by at least four times compared to the standard in the relate art. Its main application scenarios include video transmission, Augmented Reality (AR), Virtual Reality (VR), etc.

The aggregation and collaboration of multiple frequency bands refers to the communication between devices in frequency bands such as 2.4GHz, 5GHz, and 6GHz at the same time. For communication between devices in multiple frequency bands at the same time, a new Media Access Control (MAC) mechanism needs to be defined for management. In addition, it is expected that the aggregation and collaboration of multiple frequency bands can support low latency transmission.

Currently, a maximum bandwidth supported in the technology of the aggregation and collaboration of multiple frequency bands is 320MHz (160MHz+160MHz), and it may also support 240MHz (160MHz+80MHz) and other bandwidths. In the related art, a single-type resource unit or a composite resource unit can be used for data transmission.

In addition, a communication system typically adopts a Multi User Multi Input Multi Output (MU-MIMO) mechanism to improve spectrum utilization. However, in the related art, an identifier of MU-MIMO's capability information only supports the single-type resource unit and does not support the composite resource unit, so enhancement is needed.

### SUMMARY

Various aspects of the disclosure will at least address the aforementioned problems and/or disadvantages. Various embodiments of the disclosure provide the following technical solutions.

A communication method is provided according to an embodiment of the disclosure. The communication method may be performed by a communication device supporting multiple links, and can include: determining a first message frame, in which the first message frame includes information regarding multiple user multiple input multiple output (MU-MIMO), and the information regarding MU-MIMO is used to identify a support status of the communication device for a single-type resource unit and a composite resource unit; and sending the first message frame.

A communication method is provided according to an embodiment of the disclosure. The communication method can include: receiving a first message frame from a communication device supporting multiple links, in which the first message frame includes information regarding MU-MIMO, and the information regarding MU-MIMO is used to identify a support status of the communication device for a single-type resource unit and a composite resource unit; and performing a communication operation based on the first message frame.

A communication device is provided according to an embodiment of the disclosure. The communication device can be performed by a communication device supporting multiple links, and can include: a processing module configured to determine a first message frame, in which the first message frame includes information regarding MU-MIMO, and the information regarding MU-MIMO is used to identify a support status of the communication device for a single-type resource unit and a composite resource unit; and a the transceiver module, configured to send the first message frame.

A communication device is provided according to an embodiment of the disclosure. The communication device can include: a transceiver module, configured to receive a first message frame from a communication device supporting multiple links, in which the first message frame includes information regarding MU-MIMO, and the information regarding MU-MIMO is used to identify a support status of the communication device for a single-type resource unit and a composite resource unit; and a processing module, configured to control the transceiver module to perform a communication operation based on the first message frame.

An electronic device is provided according to an embodiment of the disclosure. The electronic device includes a memory, a processor, and a computer program stored on the memory and executable on the processor. The above method is implemented when the processor executes the computer program.

A computer-readable storage medium is provided according to the exemplary embodiment of the present disclosure. The computer-readable storage medium stores computer programs. The above method is implemented when the computer programs are executed by a processor.

The technical solutions provided in the embodiments of the disclosure can identify the MU-MIMO capability information supported by the device, improving system throughput.

### BRIEF DESCRIPTION OF THE DRAWINGS

The above and other features of the embodiments of the disclosure will become more apparent by describing the exemplary embodiments of the disclosure in detail with reference to the accompanying drawings, in which:
FIG. 1 is an exemplary diagram illustrating a wireless communication scenario;
FIG. 2 is a flowchart illustrating a communication method according to an embodiment;
FIG. 3 is a flowchart illustrating a communication method according to an embodiment;
FIG. 4 is a block diagram illustrating a communication device according to an embodiment of the disclosure.

### DETAILED DESCRIPTION

Description with reference to the accompanying drawings are provided in the following to assist in a comprehensive understanding of various embodiments of the present disclosure limited by the appended claims and their equivalents. The various embodiments of the present disclosure herein include various specific details, but these specific details are only considered exemplary. In addition, for clarity and conciseness, descriptions of well-known technologies, functions, and constructions can be omitted.

The terms and expressions used in this disclosure are not limited to written meanings, but are only used by the inventor to enable a clear and consistent understanding of this disclosure. Therefore, for those skilled in the art, the description of various embodiments of the disclosure is provided for illustrative purposes only, and not for limiting purposes.

It should be understood that unless the context clearly indicates otherwise, the singular forms "a", "one", "said", and "the" used here may also include the plural forms. It should be further understood that the term "including" used in this disclosure refers to the presence of the described features, integers, steps, operations, elements, and/or components, but does not exclude the presence or addition of one or more other features, integers, steps, operations, elements, components, and/or their combinations.

It will be understood that although the terms "first", "second", etc. may be used to describe various elements in this specification, these elements should not be limited by these terms. These terms are only used to distinguish one element from another. Therefore, without departing from the teachings of the exemplary embodiments, the first element discussed below can be referred to as the second element.

It should be understood that when a component is referred to as "connected" or "coupled" to another component, it can be directly connected or coupled to other components, or there can also be an intermediate component. In addition, the term "connection" or "coupling" used herein can include wireless connection or wireless coupling. The term "and/or" or the expression "at least one/at least one of..." used herein includes any or all combinations of one or more related listed items.

Unless otherwise defined, all terms used herein (including technical and scientific terms) have the same meaning as those generally understood by those skilled in the art to which this disclosure belongs.

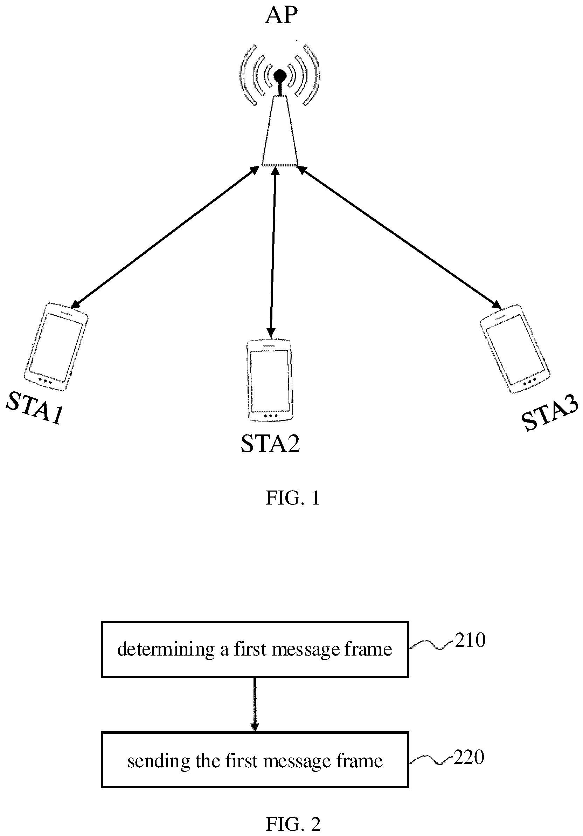

FIG. 1 is a schematic diagram illustrating a wireless communication scenario.

In a wireless local area network, a Basic Service Set (BSS) can be composed of an Access Point (AP) and one or more non AP (also known as a station (STA)) communicating with the AP. The basic service set can be connected to a Distribution System (DS) through its AP device, and then connected to another basic service set, forming an Extended Service Set (ESS).

The AP is a wireless switch used in a wireless network and is also a core of the wireless network. The AP can be used as a wireless base station, such as a bridge to connect the wireless network and a wired network. By utilizing this type of AP, the wired network and the wireless network can be integrated.

For example, the AP may include a software application and/or a circuit to enable other types of nodes in the wireless network to communicate with both external and internal of the wireless network through the AP. For example, the AP can be a terminal device or a network device equipped with a Wi-Fi chip.

For example, the station may include but is not limited to: a cellular phone, a smartphone, a wearable device, a computer, a Personal Digital Assistant (PDAs), a Personal Communication System (PCS) device, a Personal Information Manager (PIMs), a Personal Navigation Device (PNDs), a global positioning system, a multimedia device, an Internet of Things (IoT) device, etc.

Although FIG. 1 shows communication between one AP and three stations (STA1, STA2, STA3), this is only exemplary and the embodiments of the disclosure are not limited to this. For example, the AP and the STA can have any number and/or any type.

In the example embodiment of the disclosure, the AP and the STAs (as shown in FIG. 1, STA1, STA2, STA3) can be Multi-Link Devices (MLDs). For example, they can be represented as an AP MLD and non-AP STA MLDs, respectively. That is, the AP MLD can represent an access point that supports a multi-link communication function, while the non-AP STA MLD can represent a station that supports the multi-link communication function. That is to say, the AP MLD and the non-AP STA MLD support a function of performing sending and/or reception simultaneously over multiple links at the same time. For example, there can be multiple links at different frequencies between the AP MLD and the non-AP STA MLD, such as links at 2.4GHz, 5GHz, 6GHz, etc., or several links at the same or different bandwidths of 2.4GHz, 5GHz, 6GHz, etc.. In addition, multiple channels can exist on each link. The communication method and communication device provided according to the embodiments of the disclosure can be used in the communication between the AP MLD and the non-AP STA MLD, that is, can be used in a multi- link communication environment.

FIG. 2 is a flowchart illustrating a communication method according to an embodiment. The communication method shown in FIG. 2 can be used in a multi-link communication environment. The communication method shown in FIG. 2 can be performed by a sender, and the sender can be a communication device capable of supporting multiple links, such as an AP MLD or a non-AP STA MLD. However, the disclosure is not limited to this. For example, the communication method shown in FIG. 2 can be used in a single-link communication environment.

Referring to FIG. 2, at step 210, a first message frame is determined. The first message frame includes information regarding multiple user multiple input multiple output (MU-MIMO). The information regarding the MU-MIMO is used to identify a support status of the communication device for a single-type resource unit and a composite resource unit.

According to the embodiment, in the case where the communication method shown in FIG. 2 is performed by an access point (such as the AP MLD), the first message frame may be a beacon frame, a probe response frame, an association response frame, or a re-association response frame. In addition, in the case where the communication method shown in FIG. 2 is performed by a base station (such as the non-AP STA MLD), the first message frame can be a probe request frame, an association request frame, or a re-association request frame. However, the embodiment of the first message frame mentioned above is only illustrative and not a limitation of the present disclosure, and any other type of frame is also feasible.

In the embodiment of the disclosure, there may be many ways to determine the first message frame. For example, the first message frame can be generated based on at least one of the following conditions: a network condition, a load condition, a hardware capability of a sending/receiving device, a service type, and a relevant agreement specification, which is not limited in embodiments of the disclosure. In an embodiment of the disclosure, the first message frame can also be obtained from an external device, and there is no specific limitation on this in embodiments of the disclosure.

According an embodiment of the disclosure, the information regarding the MU-MIMO can be carried in a form of an information element in the first message frame. For example, a physical layer (PHY) capability information field of an extremely high throughput (EHT) capability information element can be used to implement the information regarding the MU-MIMO. The information regarding the MU-MIMO will be described in detail with reference to Tables 1 and 2 in the following.

At step 220, the first message frame is sent. In the multi-link communication environment, the sender can send the first message frame on any of multiple links to inform a receiver of the MU-MIMO capability information of the sender.

As an embodiment, the EHT capability information element may have a format as shown in Table 1 below.

**Table 1. EHT capability information element**

| | | | | |
|---|---|---|---|---|
| Element ID | Length | ...... | EHT PHY capability Information | ...... |

In Table 1, the Element ID can be configured to a specific value to identify an EHT capability information element. The Length represents the length information of the EHT capability information element. The EHT PHY capability information field can include the information regarding the MU-MIMO. In addition, the EHT capability information element shown in Table 1 is only illustrative, and the disclosure is not limited to this. For example, the EHT capability information element in Table 1 can also include an Element ID Extension field, an EHT media access control (MAC) capability information field, a supported ETH-MCS (modulation and coding scheme) and NSS (number of spatial streams) set field, and so on.

The EHT PHY capability information field can have multiple bytes (octets), such as but not limited to, 11 bytes. Each bit in the multiple bytes of the EHT PHY capability information field can represent different sub fields for carrying different capability information. According to the embodiment of the disclosure, the bits in the EHT PHY capability information field can be used to represent the information regarding the MU-MIMO. For example, as shown in Table 2, the information regarding the MU-MIMO can be represented using a partial bandwidth downlink MU-MIMO (partial bandwidth DL MU-MIMO) subfield and/or a partial bandwidth uplink MU-MIMO (partial bandwidth UL MU-MIMO) subfield in the EHT PHY capability information field.

In other words, the information regarding the MU-MIMO in the first message frame can include: partial bandwidth DL MU-MIMO information and/or partial bandwidth UL MU-MIMO information, as shown in Table 2 below.

**Table 2. EHT PHY capability information field**

| | | | | |
|---|---|---|---|---|
| ... ... | partial bandwidth DL MU-MIMO | ...... | partial bandwidth UL MU-MIMO | ... ... |

Referring to Table 2, for downlink transmission, the support status of the single-type resource unit and/or the composite resource unit can be identified using the partial bandwidth DL MU-MIMO subfield of the partial bandwidth downlink. For uplink transmission, the support status of the single-type resource unit and/or the composite resource unit can be identified by the partial bandwidth uplink MU-MIMO subfield. The single-type resource unit and/or the composite resource unit do not occupy the entire operation bandwidth. For example, on a bandwidth of 20MHz, the single-type resource used can be 52-tone, and the composite type resource used can be 106+26-tone. In other words, the partial bandwidth DL MU-MIMO information (the partial bandwidth DL MU-MIMO in Table 2) can be used to identify that the communication device supports using the single-type resource unit and/or the composite resource unit to perform downlink communication. The partial bandwidth UL MU-MIMO information (the partial bandwidth UL MU-MIMO in Table 2) can be used to identify that the communication device supports using the single-type resource unit and/or the composite resource unit to perform uplink communication.

In the embodiment of the disclosure, the single-type resource unit may refer to a resource unit containing only a specific number of subcarriers (tones). For example, the single-type resource unit may be: 26-tone, 52-tone, 106-tone, 242-tone, 484-tone, 996-tone, 2 * 996-tone or 4 * 996 tone. According to an embodiment, the composite resource unit can be composed of multiple single-type resource units. In an embodiment, the composite resource unit may consist of two specific single-type resource units, which are related to bandwidths. For example, the composite resource unit can at least include: a resource unit of a first single type and a resource unit of a second single type. The resource unit of the first single type has a different number of subcarriers (tones) from the resource unit of the second single type. In addition, the composite resource unit can be composed of at least two different single-type resource units, such as 52+26-tone, 106+26-tone, 484+242-tone, 996+484-tone, 996+484+242-tone, 996+484+242 tone, 3 × 996-tone et al. However, the disclosure is not limited to this, and the composite resource unit may also include 2×996+484-tone, 3×996+484-tone, etc.

According to the embodiments of the disclosure, an identifier of capability information of the MU-MIMO can not only support the single-type resource unit, but also the composite resource unit, thereby improving the system throughput.

In an embodiment of the present disclosure, the communication method shown in FIG. 2 can be performed by a station (such as the non-AP STA MLD) that supports multiple links. In this case, the partial bandwidth downlink MU-MIMO information (such as the partial bandwidth DL MU-MIMO subfield shown in Table 2) can be used to identify that the station is capable to support downlink communication using the single-type resource unit and/or the composite resource unit on a supported bandwidth. For example, when the partial bandwidth DL MU-MIMO subfield in Table 2 is set to a first specific value (such as "1"), it can indicate that the station supports receiving a Protocol Data Unit (PPDU) on the single-type resource unit and/or the composite resource unit in the supported bandwidth. According to the embodiment, the single-type resource unit and/or the composite resource unit do not occupy the entire supported bandwidth. For example, the partial bandwidth DL MU-MIMO information can be used to identify that the station can support receiving transmission of MU-MIMO 26-tone as well as transmission of 106+26-tone on the 20MHz bandwidth.

In the case where the communication method shown in FIG. 2 can be performed by a station (such as the non-AP STA MLD) that supports multiple links, the communication method shown in FIG. 2 can also include (not shown): receiving the PPDU using the single-type resource unit or the composite resource unit. According to embodiments, a signaling field (such as a universal signaling (U-SIG) part) of the PPDU may include: an identifier bit (STA-ID) of a station and a sequence number of a single-type resource unit or a composite resource unit (a sequence number of RU/MRU). For example, the STA-ID can be used to represent an address of the non-AP STA MLD, or it can represent an address of a subsidiary STA corresponding to a corresponding link of the non-AP STA MLD. For example, the STA-ID can be an association identifier (AID). For example, the sequence number of RU/MRU can be used to represent a number of RU/MRU on a corresponding bandwidth.

In the case where the communication method shown in FIG. 2 can be performed by the station (such as the non-AP STA MLD) that supports multiple links, the partial bandwidth UL MU-MIMO information (such as the partial bandwidth UL MU-MIMO subfield shown in Table 2) can be used to identify that the station supports sending a trigger-based (TB) MU-MIMO transmission using the single-type resource unit and/or the composite resource unit. For example, the partial bandwidth UL MU-MIMO information can be used to identify that the station supports sending of an EHT TB PPDU on the single-type resource unit and/or the composite resource unit within the supported bandwidth. According to an embodiment, the single-type resource unit and/or the composite resource unit used by the station when sending the EHT TB PPDU do not occupy the entire supported bandwidth.

In another embodiment of the present disclosure, the communication method shown in FIG. 2 can be performed by an access point (such as the AP MLD) that supports multiple links. In this case, the partial bandwidth UL MU-MIMO information (such as the partial bandwidth UL MU-MIMO subfield shown in Table 2) can be used to identify that the access point supports receiving a trigger-based MU-MIMO transmission using the single-type resource unit and/or the composite resource unit. For example, the partial bandwidth uplink MU-MIMO information can be used to identify that the access point supports receiving a TB UL MU-MIMO transmission (such receiving an EHT TB PPDU) on a certain bandwidth (for example,). According to an embodiment, the single-type resource unit and/or the composite resource unit used by the access point when receiving the EHT TB PPDU do not occupy the entire supported bandwidth.

According to the embodiments of the present disclosure, in the EHT capability information element, the partial bandwidth DL MU-MIMO subfield and the partial bandwidth UL MU-MIMO subfield carried in the PHY capability information field can identify situation regarding the single-type resource unit (RU) or composite resource unit (MRU) supported by the device, which may be as follows.

The partial bandwidth DL MU-MIMO subfield is used to identify that the non-AP STA MLD is capable to support receiving downlink RU/MRU communication within the supported bandwidth. For example, a station can support receiving downlink MU-MIMO 26-tone transmission at a bandwidth of 20MHz, and can also support receiving downlink MU-MIMO 106+26-tone transmission. The format of the received PPDU in the signaling field (such as U-SIG) is: STA-ID + sequence number of RU/MRU;

The partial bandwidth UL MU-MIMO subfield identifies, for the AP MLD, support of receiving TB UL MU-MIMO transmission at a certain bandwidth. The transmission resource used can be either the RU or the MRU. For example, at 20MHz bandwidth, it can be either a 26-tone RU or a 106+26-tone MRU. For non-AP STA MLD, the partial bandwidth UL MU-MIMO subfield identifies support of sending TB UL MU-MIMO transmission. The transmission resource used can be either the RU or the MRU.

It will be understood that the embodiments of the disclosure describe the single-type resource unit and the composite resource unit at a bandwidth of 20MHz, but the disclosure is not limited to this, and various resource units at other bandwidths are also included within the scope of the disclosure.

According to embodiments, the composite resource unit identifying the support status in the partial bandwidth DL MU-MIMO subfield and the partial bandwidth UL MU-MIMO subfield can be at least one of: 52+26-tone, 106+26-tone, 484+242-tone, 996+484-tone, 996+484-tone, 996+484+242-tone, 3×996-tone. According to the embodiment, the partial bandwidth DL MU-MIMO subfield and the partial bandwidth UL MU-MIMO subfield identify that all or some of the composite resource units mentioned above are supported. However, the composite resource unit shown here are only descriptive embodiments and are not limitations to the disclosure. Other sizes of composite resource unit are also included within the scope of the disclosure.

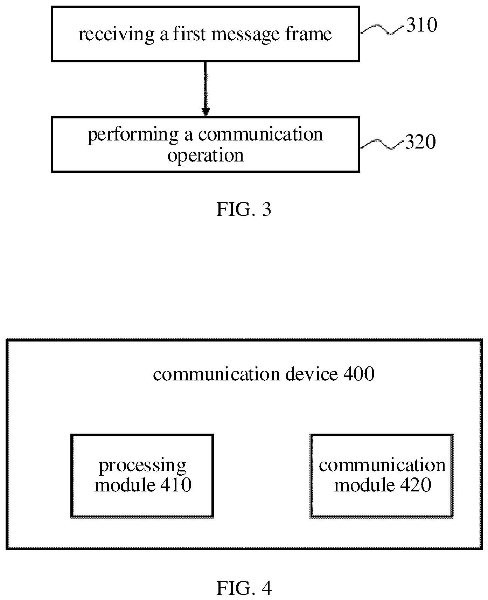

FIG. 3 is a flowchart illustrating a communication method according to an embodiment. The communication method shown in FIG. 3 can be performed by a receiver in a multi-link communication environment, and the receiver can be a communication device that is capable of supporting multiple links. For example, a sender may be an AP MLD and the receiver can be a non-AP STA MLD. Or, the sender can be a non-AP STA MLD, and the receiver can be an AP MLD. However, the disclosure is not limited to this. For example, the communication method shown in FIG. 3 can be used in a single-link communication environment.

With reference to FIG. 3, at step 310, a first message frame is received from a communication device (i.e., the sender) supporting multiple links. At step 310, the receiver may receive the first message frame from the sender (i.e., the communication device supporting multiple links in step 310). According to the embodiment, the first message frame may include information regarding MU-MIMO, the information regarding MU-MIMO can be used to identify a support status of the communication device for a single-type resource unit and a composite resource unit.

According to an embodiment, the information regarding MU-MIMO may include partial bandwidth downlink MU-MIMO information. In the case where the communication device in step 310 is a station supporting multiple links, the partial bandwidth downlink MU-MIMO information is used to identify that the station is capable to support downlink communication using the single-type resource unit and/or the composite resource unit on a supported bandwidth.

According to an embodiment, the information regarding MU-MIMO may include partial bandwidth uplink MU-MIMO information, which is used to identify that the communication device supports uplink communication using the single-type resource unit and/or the composite resource unit.

According to an embodiment, in the case where the communication device is a station that supports multiple links, the partial bandwidth UL MU-MIMO information is used to identify that the station is capable to support sending of a trigger-based MU-MIMO transmission using the single-type resource unit and/or the composite resource unit.

According to an embodiment, in the case where the communication device is an access point supporting multi links, the partial bandwidth UL MU-MIMO information is used to identify that the access point supports receiving of the trigger-based MU-MIMO transmission using the single-type resource unit and/or the composite resource unit.

According to the embodiment, the composite resource unit may be at least one of the following: 52+26-tone, 106+26-tone, 484+242-tone, 996+484-tone, 996+484+242-tone, 996+484+242-tone, 3 × 996-tone.

The first message frame, the information regarding MU-MIMO, the partial bandwidth uplink MU-MIMO information, the partial bandwidth downlink MU-MIMO information, the single-type resource unit, and the composite resource unit involved in step 310 can be similar to that in the embodiments described with reference to FIG. 2 and Tables 1 and 2, and for simplicity, repeated descriptions are omitted here.

At step 320, a communication operation can be performed based on the first message frame. The receiver can obtain the MU-MIMO capability information of the sender through the first message frame, and select an appropriate resource for communication based on the obtained capability information.

It will be understood that the communication method shown in FIG. 3 is only exemplary and not a limitation to the present disclosure. For example, the communication method shown in FIG. 3 may further include: in the case where the communication device in step 310 is a station that supports multiple links, a PPDU is received using the single-type resource unit or the composite resource unit. According to the embodiment, a signaling field of the received PPDU can include: an identifier bit of the station and a sequence number of the single type resource unit or the composite resource unit.

FIG. 4 is a block diagram illustrating a communication device 400 according to an embodiment of the present disclosure.

With reference to FIG. 4, the communication device 400 may include a processing module 410 and a transceiver module 420. The communication device shown in FIG. 4 can be performed by a sender or a receiver in a multi-link communication environment.

In the case where the communication device 400 shown in FIG. 4 is performed by the sender, the processing module 410 can be configured to: determine a first message frame. The first message frame includes information regarding MU-MIMO, and the information regarding MU-MIMO is used to identify a support status of the communication device for a single-type resource unit and a composite resource unit. The transceiver module 420 can be configured to send the first message frame. In this case, the communication device 400 can perform the communication method described with reference to FIG. 2, and for simplicity, repeated descriptions are omitted here.

In the case where the communication device shown in FIG. 4 is performed by the receiver, the transceiver module 420 can be configured to receive a first message frame from a communication device supporting multiple links. The first message frame includes information regarding MU-MIMO, and the information regarding MU-MIMO is used to identify a support status of the communication device for a single-type resource unit and a composite resource unit. The processing module 410 can be configured to control the transceiver module to perform a communication operation based on the first message frame. In this case, the communication device 400 can perform the communication method described with reference to FIG. 3, and for simplicity, repeated descriptions are omitted here.

The first message frame, the information regarding MU-MIMO, the partial bandwidth UL MU-MIMO information, the partial bandwidth DL MU-MIMO information, the single-type resource unit, and the composite resource unit involved in the embodiment of FIG. 4 can be similar to that in the embodiments described with reference to FIG. 2 and FIG. 3, as well as Table 1 and Table 2. For simplicity, repeated descriptions are omitted here.

In addition, the communication device 400 shown in FIG. 4 is only exemplary, and the embodiments of the disclosure are not limited to this. For example, the communication device 400 may also include other modules, such as a memory module, etc. In addition, the various modules in the communication device 400 can be combined into more complex modules or divided into more individual modules.

The communication method and the communication device according to the embodiments of the disclosure can identify the capability information value of MU-MIMO supported by the device, thereby improving system throughput.

Based on the same principles as the methods provided in the embodiments of the disclosure, embodiments of the disclosure also provide an electronic device, which includes a processor and a memory. The memory stores machine readable instructions (also known as "computer programs"). The processor is configured to execute the machine readable instructions to implement the method described with reference to FIG. 2 and FIG. 3.

Embodiments of the disclosure also provides a computer-readable storage medium having a computer program stored thereon. When the computer program is executed by a processor, the method described with reference to FIG. 2 or FIG. 3 is implemented.

In an exemplary embodiment, the processor may be used to implement or execute various exemplary logical blocks, modules, and circuits described in combination with the content of the disclosure, such as a Central Processing Unit (CPU), a general-purpose processor, a Digital Signal Processor (DSP), an Application Specific Integrated Circuit (ASIC), a Field Programmable Gate Array (FPGA) or other programmable logic devices, transistor logic devices, hardware components, or any combination thereof. The processor can also be a combination of computing functions, such as a combination of one or more microprocessors, a combination of a DSP and a microprocessor, etc.

In example embodiments, the memory can be, for example, a Read Only Memory (ROM), a Random Access Memory (RAM), an Electrically Erasable Programmable Read Only Memory (EEPROM), a Compact Disc Read Only Memory (CD-ROM), or other optical disc storages, Optical disk storages (including compressed optical discs, laser discs, optical discs, digital universal optical discs, blue ray discs, etc.), disk storage media or other magnetic storage devices, or any other media that can be used to carry or store program codes in the form of instructions or data structures and can be accessed by a computer, but is not limited to this.

It should be understood that although the steps in the flowchart of the accompanying drawings are displayed sequentially according to the arrows, these steps are not necessarily executed in the order indicated by the arrows. Unless explicitly stated in this specification, there is no strict order limit for the execution of these steps, which can be executed in other order. In addition, at least a portion of the steps in the flowchart of the accompanying drawings may include multiple sub steps or stages, which may not necessarily be completed at the same time, but may be executed at different time points, and their execution order may not necessarily be sequential, but may be executed in turn or alternately with other steps or at least a portion of the sub steps or stages of other steps.

Although the present disclosure has been illustrated and described with reference to certain embodiments of the present disclosure, those skilled in the art will understand that various changes in form and details may be made without departing from the scope of the present disclosure. Therefore, the scope of the disclosure should not be limited to the embodiments, but should be defined by the appended claims and their equivalents.

## Claims

1. A communication method, performed by a communication device supporting multiple links, comprising:
determining a first message frame, wherein the first message frame comprises information regarding multiple user multiple input multiple output (MU-MIMO), and the information regarding MU-MIMO is used to identify a support status of the communication device for a single-type resource unit and a composite resource unit; and
sending the first message frame.

2. The communication method according to claim 1, wherein the information regarding MU-MIMO comprises: partial bandwidth downlink MU-MIMO information,
in a case where the communication device is a station supporting multiple links, the partial bandwidth downlink MU-MIMO information is used to identify that the station is capable to support downlink communication using the single-type resource unit and/or the composite resource unit on a supported bandwidth.

3. The communication method according to claim 2, further comprising: receiving a protocol data unit (PPDU) using the single-type resource unit or the composite resource unit,
wherein, a signaling field of the PPDU comprises: an identifier bit of the station and a sequence number of the single-type resource unit or the composite resource unit.

4. The communication method according to claim 1, wherein the information regarding MU-MIMO comprises: partial bandwidth uplink MU-MIMO information, and the partial bandwidth uplink MU-MIMO information is used to identify that the communication device supports uplink communication using the single-type resource unit and/or the composite resource unit.

5. The communication method according to claim 4, wherein in a case where the communication device is a station supporting multiple links, the partial bandwidth uplink MU-MIMO information is used to identify that the station supports sending of a trigger-based MU-MIMO transmission using the single-type resource unit and/or the composite resource unit.

6. The communication method according to claim 4, wherein in a case where the communication device is an access point supporting multiple links, the partial bandwidth uplink MU-MIMO information is used to identify that the access point supports reception of a trigger-based MU-MIMO transmission using the single-type resource unit and/or the composite resource unit.

7. The communication method according to any one of claims 1 to 6, wherein the composite resource unit comprises at least one of:
52+26-tone, 106+26-tone, 484+242-tone, 996+484-tone, 996+484+242-tone, or 3 × 996-tone.

8. A communication method, comprising:
receiving a first message frame from a communication device supporting multiple links, wherein the first message frame comprises information regarding multiple user multiple input multiple output (MU-MIMO), and the information regarding MU-MIMO is used to identify a support status of the communication device for a single-type resource unit and a composite resource unit; and
performing a communication operation based on the first message frame.

9. The communication method according to claim 8, wherein the information regarding MU-MIMO comprises: partial bandwidth downlink MU-MIMO information,
in a case where the communication device is a station supporting multiple links, the partial bandwidth downlink MU-MIMO information is used to identify that the station is capable to support downlink communication using the single-type resource unit and/or the composite resource unit on a supported bandwidth.

10. The communication method according to claim 9, further comprising: receiving a protocol data unit (PPDU) using the single-type resource unit or the composite resource unit,
wherein, a signaling field of the PPDU comprises: an identifier bit of the station and a sequence number of the single-type resource unit or the composite resource unit.

11. The communication method according to claim 8, wherein the information regarding MU-MIMO comprises: partial bandwidth uplink MU-MIMO information, and the partial bandwidth uplink MU-MIMO information is used to identify that the communication device supports uplink communication using the single-type resource unit and/or the composite resource unit.

12. The communication method according to claim 11, wherein in a case where the communication device is a station supporting multiple links, the partial bandwidth uplink MU-MIMO information is used to identify that the station is capable to support sending of a trigger-based MU-MIMO transmission using the single-type resource unit and/or the composite resource unit.

13. The communication method according to claim 11, wherein in a case where the communication device is an access point supporting multiple links, the partial bandwidth uplink MU-MIMO information is used to identify that the access point supports receiving of a trigger-based MU-MIMO transmission using the single-type resource unit and/or the composite resource unit.

14. The communication method according to any one of claims 8 to 13, wherein the composite resource unit comprises at least one of:
52+26-tone, 106+26-tone, 484+242-tone, 996+484-tone, 996+484+242-tone, 3 × 996-tone.

15. A communication device under multiple links, performed by a communication device supporting multiple links, comprising:
a processing module, configured to determine a first message frame, wherein the first message frame comprises information regarding multiple user multiple input multiple output (MU-MIMO), and the information regarding MU-MIMO is used to identify a support status of the communication device for a single-type resource unit and a composite resource unit;
a transceiver module, configured to send the first message frame.

16. A communication device under multiple links, comprising:
a transceiver module, configured to receive a first message frame from a communication device supporting multiple links, wherein the first message frame comprises information regarding multiple user multiple input multiple output (MU-MIMO), and the information regarding MU-MIMO is used to identify a support status of the communication device for a single-type resource units and a composite resource unit; and
a processing module, configured to control the transceiver module to perform a communication operation based on the first message frame.

17. An electronic device comprising a memory, a processor, and a computer program stored on the memory and executable on the processor, wherein, when the processor executes the computer program, the method according to any one of claims 1 to 7 or any one of claims 8 to 14.

18. A computer-readable storage medium having stored thereon a computer program that, when executed by a processor, the method according to any one of claims 1 to 7 or any one of claims 8 to 14 is implemented.
